# EUROPÄISCHE PATENTANMELDUNG

(11) **EP 0 867 456 A1**
(43) Veröffentlichungstag der Anmeldung: **30.09.1998**
(21) Anmeldenummer: 97810056.8
(22) Anmeldetag: 04.02.1997
(51) Int. Cl.: C08G 18/10, C08G 18/48, C08G 18/81, G02B 1/04

(54) **Ophthalmischer Formkörper**

(71) Anmelder: Novartis AG, 4058 Basel (CH)
(72) Erfinder: Die Erfindernennung liegt noch nicht vor

(57) **Zusammenfassung**

Die Erfindung betrifft ophthalmische Formkörper, insbesondere Kontaktlinsen, die erhältlich sind durch Vernetzung eines Präpolymers, welches das Copolymerisationsprodukt aus
(a) mindestens einem Polyalkylenglykol der Formel

   HO-(CH₂-CH₂-O)ₙ-(CHY₁-CHY₂-O)ₘ-(CHY₃-CHY₄-O)ₚ-H (1)

   oder

   HO-[(CH₂-CH₂-CH₂-CH₂-O-]_{q}-H (1'),
(b) mindestens einer Polyhydroxyverbindung der Formel

   R₁-(OH)ₓ (2),

   oder einem davon abgeleiteten Polyetherpolyol oder Polyesterpolyol,
(c) mindestens einem Di- oder Polyisocyanat der Formel

   R₂-(NCO)_{y} (3),
(d) mindestens einem ethylenisch ungesättigten Monoisocyanat der Formel 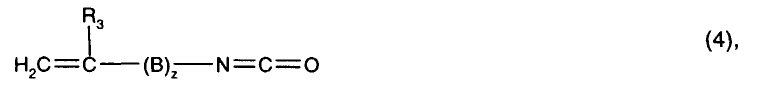 und gegebenenfalls weiteren copolymerisierbaren Monomeren ist, worin die Variablen die in den Ansprüchen angegebene Bedeutung haben,
in Abwesenheit oder Anwesenheit eines zusätzlichen vinylischen Comonomers.

## Beschreibung

Die vorliegende Erfindung betrifft spezifische verzweigte Polyurethan-(Meth)acrylate, Verfahren zu ihrer Herstellung sowie diese enthaltende ophthalimische Formkörper, insbesondere Kontaktlinsen.

Es sind bereits z.B. aus JP-A-3-210317 polymerisierbare, anorganische Füllstoffe enthaltende Urethan-Harze, bei denen es sich um das Umsetzungsprodukt einer ethylenisch ungesättigten Polyisocyanat-Komponente mit einem ethylenisch ungesättigten Polyol handelt, und ihre thermische Vernetzung zu Formkörpern bekannt.

Des weiteren sind z.B. aus JP-A-7-292046 polymerisierbare Harze, bei denen es sich um das Additionsprodukt eines ungesättigten Isocyanats mit einem aminogruppenhaltigen Urethan handelt, bekannt.

Es wurden nun überraschend spezifische vernetzbare, verzweigte Polyurethan-(Meth)acrylate gefunden, die sich insbesondere zur Herstellung von ophthalmischen Formkörpern wie z.B. Kontaktlinsen eignen.

Gegenstand der vorliegenden Erfindung sind ophthalmische Formkörper, erhältlich durch Vernetzung eines Präpolymers, welches das Copolymerisationsprodukt aus
(a) mindestens einem Polyalkylenglykol der Formel

   HO-(CH₂-CH₂-O)ₙ-(CHY₁-CHY₂-O)ₘ-(CHY₃-CHY₄-O)ₚ-H (1)

   oder

   HO-[(CH₂-CH₂-CH₂-CH₂-O-]_{q}-H (1'),

   worin von Y₁ und Y₂ der eine Rest Methyl und der andere Rest Wasserstoff bedeutet, von Y₃ und Y₄ der eine Rest Ethyl und der andere Rest Wasserstoff ist, q für eine Zahl von 1 bis 50 und n, m und p unabhängig voneinander je für eine Zahl von 0 bis 100 stehen, worin die Summe von (n+m+p) 5 bis 100 beträgt,
(b) mindestens einer Verbindung aus der Gruppe
   (i) Polyhydroxyverbindung der Formel

      R₁-(OH)ₓ (2),

      worin R₁ der Rest eines mehrfunktionellen aliphatischen oder cycloaliphatischen Alkohols ist und x für eine Zahl ≥ 3 steht,
   (ii) Polyetherpolyol, welches das Polymerisationsprodukt aus einer Verbindung der Formel (2) und einem Glykol ist, und
   (iii) Polyesterpolyol, welches das Polymerisationsprodukt aus einer Verbindung der Formel (2), einer Dicarbonsäure oder einem Derivat davon und einem Diol ist,
(c) mindestens einem Di- oder Polyisocyanat der Formel

   R₂-(NCO)_{y} (3),

   worin R₂ der Rest eines aliphatischen, cycloaliphatischen, aliphatisch-cycloaliphatischen, aromatischen oder araliphatischen Di- oder Polyisocyanats ist und y für eine Zahl von 2 bis 6 steht,
(d) mindestens einem ethylenisch ungesättigten Monoisocyanat der Formel 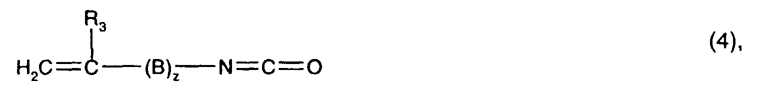 worin R₃ für Wasserstoff oder Methyl steht, z die Zahl 0 oder 1 bedeutet, B C₁-C₆-Alkylen, gegebenenfalls durch C₁-C₄-Alkyl oder C₁-C₄-Alkoxy substituiertes Phenylen oder C₇-C₁₂-Aralkylen oder ein Rest der Formel 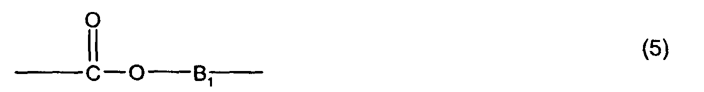 ist und B₁ lineares oder verzweigtes C₂-C₁₂-Alkylen, welches gegebenenfalls durch ein oder mehrere Sauerstoffatome unterbrochen ist, bedeutet,
und gegebenenfalls einem oder mehreren weiteren copolymerisierbaren Monomeren ist, in Abwesenheit oder Anwesenheit eines zusätzlichen vinylischen Comonomers.

In Formel (1) stehen n, m und p unabhängig voneinander je bevorzugt für eine Zahl von 0 bis 50, wobei die Summe von (n+m+p) 8 bis 50 beträgt. Besonders bevorzugt stehen n, m und p unabhängig voneinander je für eine Zahl von 0 bis 25, wobei die Summe von (n+m+p) 9 bis 25 beträgt. In Formel (1') bedeutet q bevorzugt eine Zahl von 1 bis 20.

Bei dem Polyalkylenglykol gemäss (a) handelt es sich z.B. um ein Polyethylenglykol, Polypropylenglykol, Polyethylenglykol/Polypropylenglykol-Blockpolymer, Polyethylenglykol/Polypropylenglykol/Polybutylenglykol-Blockpolymer oder um ein Polytetrahydrofuran.

Bevorzugte Ausführungsformen der Polyalkylenglykole gemäss (a) stellen dar: (i) Verbindungen der Formel (1), worin p 0 ist, n und m unabhängig voneinander je eine Zahl von 0 bis 100, bevorzugt 0 bis 50 und besonders bevorzugt 0 bis 25 sind, und die Summe von (n+m) 5 bis 100, bevorzugt 8 bis 50 und besonders bevorzugt 9 bis 25 betragt; (ii) Verbindungen der Formel (1), worin p und m je 0 sind und n eine Zahl von 5 bis 100, bevorzugt 8 bis 50 und besonders bevorzugt 9 bis 25 bedeutet.

R₁ bedeutet in Formel (2) z.B. den Rest eines cycloaliphatischen oder vorzugsweise aliphatischen Polyols mit 2 bis 18, bevorzugt 3 bis 12 und besonders bevorzugt 3 bis 8 Kohlenstoffatomen. Die Variable x bedeutet bevorzugt eine Zahl von 3 bis 12, bevorzugt eine Zahl von 3 bis 8, besonders bevorzugt eine Zahl von 3 bis 6, und insbesondere bevorzugt die Zahl 3.

Beispiele für geeignete Polyhydroxyverbindungen der Formel (2) sind Glycerin, Diglycerin, Triglycerin, 1,1,1-Trishydroxymethylethan, 1,1,1-Trishydroxymethylpropan, 1,2,4-Butantriol, 1,2,6-Hexantriol, Erythrit, Pentaerythrit, Di- oder Tripentaerithrit, Arabit, Sorbit, Disorbit oder Mannit und Mischungen davon. Bevorzugt als Verbindung der Formel (2) sind Glycerin,1,1,1-Trishydroxymethylpropan, 1,2,4-Butantriol, Erythrit, Pentaerythrit, Arabit oder Sorbit. Eine Gruppe von besonders bevorzugten Verbindungen der Formel (2) umfasst Glycerin,1,1,1-Trishydroxymethylpropan und Pentaerythrit.

Geeignet als Polyhydroxyverbindung gemäss (b) sind weiterhin Umsetzungsprodukte der obengenannten Polyhydroxyverbindungen der Formel (2) mit einer Dicarbonsäure bzw. einem Derivat einer Dicarbonsäure, z.B. einem Dicarbonsäureanhydrid, -ester oder -halogenid, sowie einem Diol, wobei sich oligomere Polyesterpolyole ergeben, oder Umsetzungsprodukte der obengenannten Polyhydroxyverbindungen mit einem Glykol, wobei sich oligomere Polyetherpolyole ergeben.

Handelt es sich bei der Polyhydroxyverbindung gemäss (b) um ein Polyesterpolyol, so ist dies bevorzugt ein oligomeres Umsetzungsprodukt einer Verbindung der Formel (2), worin die zuvor genannten Bedeutungen und Bevorzugungen gelten, mit einer 3 bis 12 Kohlenstoffatome aufweisenden aliphatischen oder cycloaliphatischen Dicarbonsäure oder einer 5 bis 15 Kohlenstoffatome aufweisenden aromatischen Dicarbonsäure oder einem geeigneten Derivat davon, z.B. einem entsprechenden Dicarbonsäureanhydrid, -ester oder -halogenid sowie einem Diol als Kettenverlängerer. Beispiele für geeignete Dicarbonsäuren sind Malonsäure, Bernsteinsäure, 2,2-Dimethylbernsteinsäure, Glutarsäure, Adipinsäure, Pimelinsäure, Sebacinsäure, Tetrahydrophthalsäure, Hexahydrophthalsäure, Phthalsäure, Isophthalsäure, Terephthalsäure, Maleinsäure oder Fumarsäure sowie die entsprechenden Dicarbonsäureester, -halogenide oder anhydride. Geeignet als Diol sind z.B. lineare oder verzweigte C₂-C₂₀-Alkyl-Diole; Verbindungen der zuvor angegebenen Formel (1), worin Y₁ und Y₂ die zuvor angegebene Bedeutung haben, p 0 ist, m und n unabhängig voneinander je eine Zahl von 0 bis 10 bedeuten, und die Summe von (n+m) 3 bis 10 beträgt; sowie aromatisch-aliphatische Diole mit 7 bis 20 C-Atomen.

Handelt es sich bei der Polyhydroxyverbindung gemäss (b) um ein Polyetherpolyol, so ist dies bevorzugt ein kurzkettiges Polymerisat aus einer Verbindung der Formel (2), worin die zuvor genannten Bedeutungen und Bevorzugungen gelten, und Ethylenglykol, Propylenglykol oder einem Gemisch davon.

Die oben beschriebenen Polyesterpolyole und Polyetherpolyole sind kommerziell z.B. als Desmophen®-Typen, z.B. als Desmophen®650, 670, 550U, 250U, erhältlich.

R₂ bedeutet in Formel (3) z.B. den Rest eines lineares oder verzweigten aliphatischen Polyisocyanats mit 3 bis 24 C-Atomen, den Rest eines cycloaliphatischen oder aliphatischcycloaliphatischen Polyisocyanats mit 3 bis 24 C-Atomen, oder den Rest eines aromatischen oder araliphatischen Polyisocyanats mit 6 bis 24 C-Atomen. Die Variable y bedeutet bevorzugt eine Zahl von 2 bis 4 und besonders bevorzugt die Zahl 2.

Bei dem Polyisocyanat gemäss (c) handelt es sich bevorzugt um ein Diisocyanat der Formel

OCN-R₂-NCO, (3a),

worin R₂ lineares oder verzweigtes C₃-C₁₈-Alkylen oder unsubstituiertes oder durch C₁-C₄-Alkyl oder C₁-C₄-Alkoxy substituiertes C₆-C₁₀-Arylen, C₇-C₁₈-Aralkylen, C₆-C₁₀-Arylen-C₁-C₂-Alkylen-C₆-C₁₀-Arylen, C₃-C₈-Cycloalkylen, C₃-C₈-Cycloalkylen-C₁-C₆-Alkylen, C₃-C₈-Cycloalkylen-C₁-C₂-Alkylen-C₃-C₈-Cycloalkylen oder C₁-C₆-Alkylen-C₃-C₈-Cycloalkylen-C₁-C₆-Alkylen bedeutet.

R₂ enthält als lineares oder verzweigtes Alkylen bevorzugt 3 bis 14 und besonders bevorzugt 4 bis 12 C-Atome. Beispiele für Alkylen sind 1,2- oder 1,3-Propylen, 2-Methyl- oder 2,2-Dimethyl-1,3-propylen, 1,2-, 1,3-, 1,4- oder 2,3-Butylen, 2-Methyl- oder 2,3-Dimethyl-1,4-butylen, 1,2-, 1,3-, 1,4- oder 1,5-Pentylen, 2-Methyl- oder 3-Methyl- oder 4-Methyl- oder 2,3-Dimethyl- oder 2,4-Dimethyl oder 3,4-Dimethyl- oder 2,3,4-Trimethyl oder 2,2,3-Trimethyl- 2,2,4-Tri-methyl- oder 2,2,3,3-Tetramethyl- oder 2,2,3,4-Tetramethyl-1,5-pentylen, 1,2-, 1,3-, 1,4-, 1,5- oder 1,6-Hexylen, 2-Methyl- oder 3-Methyl oder 4-Methyl- oder 2,2-Dimethyl- oder 3,3-Dimethyl- oder 2,3-Dimethyl- oder 2,4-Dimethyl- oder 3,4-Dimethyl- oder 2,2,3-Trimethyl- oder 2,2,4-Trimethyl- oder 2,2,5-Trimethyl- oder 2,3,4-Trimethyl- oder 2,2,4,5-Tetramethyl-1,6-hexylen, 1,2-, 1,3-, 1,4- 1,5, 1,6- oder 1,7-Heptylen, 2-Methyl- oder 3-Methyl- oder 4-Methyl- oder 5-Methyl- oder 2,2-Dimethyl- oder 3,3-Dimethyl- oder 2,3-Dimethyl- oder 2,4-Dimethyl- oder 3,4-Dimethyl- oder 2,2,3-Trimethyl- oder 2,2,4-Trimethyl- oder 2,2,5-Trimethyl- oder 2,2,6-Trimethyl- oder 2,3,4-Trimethyl- oder 2,4,5-Trimethyl- oder 2,4,6-Trimethyl- oder 2,2,4,5-Tetramethyl-1,7-heptylen, 1,2-, 1,3-, 1,4- 1,5- 1,6-, 1,7- oder 1,8--Octylen, 2-Methyl- oder 3-Methyl- oder 4-Methyl- oder 5-Methyl- oder 6-Methyl- oder 7-Methyl- oder 2,2-Dimethyl- oder 3,3-Dimethyl- oder 2,3-Dimethyl- oder 2,4-Dimethyl- oder 3,4-Dimethyl- oder 2,6-Dimethyl- oder 2,7-Dimethyl- oder 2,2,4-Trimethyl- oder 2,2,5-Trimethyl- oder 2,2,6-Trimethyl- oder 2,2,5,6-Tetramethyl-1,8-Octylen, 1,2-, 1,3-, 1,4- 1,5- 1,6-, 1,7-, 1,8- oder 1,9-Nonylen, 2-Methyl- oder 3-Methyl- oder 4-Methyl- oder 5-Methyl- oder 6-Methyl- oder 7-Methyl- oder 8-Methyl oder 2,2-Dimethyl- oder 3,3-Dimethyl- oder 2,3-Dimethyl- oder 2,4-Dimethyl- oder 3,4-Dimethyl- oder 2,6-Dimethyl- oder 2,7-Dimethyl- oder 2,8-Dimethyl- oder 2,2,4-Trimethyl- oder 2,2,5-Trimethyl- oder 2,2,6-Trimethyl- oder 2,2,7-Trimethyl- oder 2,2,8-Trimethyl-nonylen, 1,2-, 1,3-, 1,4- 1,5- 1,6-, 1,7-, 1,8-, 1,9- oder 1,10-Decylen, 2-Methyl- oder 3-Methyl- oder 4-Methyl- oder 5-Methyl- oder 6-Methyl- oder 7-Methyl- oder 8-Methyl- oder 9-Methyl- oder 2,2-Dimethyl- oder 3,3-Dimethyl- oder 2,3-Dimethyl- oder 2,4-Dimethyl- oder 3,4-Dimethyl- oder 2,6-Dimethyl- oder 2,7-Dimethyl-, 2,8-Dimethyl- oder 2,9-Dimethyl-1,10-decylen, 1,2-, 1,3-, 1,4- 1,5- 1,6-, 1,7-, 1,8-, 1,9-, 1,10- oder 1,11-Undecylen, 2-Methyl- oder 3-Methyl- oder 4-Methyl- oder 5-Methyl- oder 6-Methyl- oder 7-Methyl- oder 8-Methyl- oder 9-Methyl- oder 10-Methyl-1,11-undecylen, oder 1,4- 1,5- 1,6-, 1,7-, 1,8-, 1,9-, 1,10-, 1,11- oder 1,12-Dodecylen.

R₂ bedeutet als Alkylen bevorzugt einen linearen oder verzweigten C₃-C₁₈-Alkylenrest, besonders bevorzugt einen linearen oder verzweigten C₄-C₁₂-Alkylenrest und insbesondere bevorzugt einen linearen oder verzweigten C₆-C₁₀-Alkylenrest. Einige bevorzugte Alkylenreste sind 1,4-Butylen, 2,2-Dimethyl-1,4-butylen, 1,5-Pentylen, 2,2-Dimethyl-1,5-pentylen, 1,6-Hexylen, 2,2,3- oder 2,2,4-trimethyl-1,5-pentylen, 2,2-Dimethyl-1,6-hexylen, 2,2,3- oder 2,2,4- oder 2,2,5-Trimethyl-1,6-hexylen, 2,2-Dimethyl-1,7-heptylen, 2,2,3- oder 2,2,4- oder 2,2,5- oder 2,2,6-Trimethyl-1,7-heptylen, 1,8-Octylen, 2,2-Dimethyl-1,8-octylen oder 2,2,3- oder 2,2,4- oder 2,2,5- oder 2,2,6- oder 2,2,7-Trimethyl-1,8-octylen.

Wenn R₂ Arylen ist, handelt es sich bevorzugt um Naphthylen und besonders bevorzugt um Phenylen. Wenn das Arylen substituiert ist, befindet sich ein Substituent vorzugsweise in Orthostellung zu einer Isocyanatgruppe. Beispiele für substituiertes Arylen sind 1-Methyl-2,4-phenylen, 1,5-Dimethyl-2,4-phenylen, 1-Methoxy-2,4-phenylen oder 1-Methyl-2,7-naphthylen.

R₂ als Aralkylen ist bevorzugt Naphthylalkylen und besonders bevorzugt Phenylalkylen. Die Alkylengruppe im Aralkylen enthält bevorzugt 1 bis 12, besonders bevorzugt 1 bis 6 und insbesondere bevorzugt 1 bis 4 C-Atome. Ganz besonders bevorzugt stellt die Alkylengruppe im Aralkylen Methylen oder Ethylen dar. Einige Beispiele sind 1,3- oder 1,4-Benzylen, Naphth-2-yl-7-methylen, 6-Methyl-1,3- oder 1,4-benzylen, 6-Methoxy-1,3- oder 1,4-benzylen.

Wenn R₂ Cycloalkylen ist, handelt es sich bevorzugt um C₅-C₆-Cycloalkylen und besonders bevorzugt um Cyclohexylen, das jeweils unsubstituiert oder mit Methyl substituiert ist. Einige Beispiele sind 1,3-Cyclobutylen, 1,3-Cyclopentylen, 1,3- oder 1,4-Cyclohexylen, 1,3- oder 1,4-Cycloheptylen, 1,3- oder 1,4- oder 1,5-Cyclooctylen, 4-Methyl-1,3-Cyclopentylen, 4-Methyl-1,3-Cyclohexylen, 4,4-Dimethyl-1,3-Cyclohexylen, 3-Methyl- oder 3,3-Dimethyl-1,4-Cyclohexylen, 3,5-Dimethyl-1,3-Cyclohexylen, 2,4-Dimethyl-1,4-Cyclohexylen.

Wenn R₂ Cycloalkylen-Alkylen bedeutet, handelt es sich bevorzugt um Cyclopentylen-C₁-C₄-Alkylen und besonders um Cyclohexylen-C₁-C₄-Alkylen, das jeweils unsubstituiert oder einfach oder mehrfach mit C₁-C₄-Alkyl, besonders Methyl, substituiert ist. Bevorzugter steht die Gruppe Cycloalkylen-Alkylen für Cyclohexylen-Ethylen und insbesondere bevorzugt für Cyclohexylen-Methylen, welches jeweils im Cyclohexylenrest unsubstituiert oder durch 1 bis 3 Methylgruppen substituiert ist. Einige Beispiele sind Cyclopent-1-yl-3-methylen, 3-Methyl-cyclopent-1-yl-3-methylen, 3,4-Dimethyl-cyclopent-1-yl-3-methylen, 3,4,4-Trimethyl-cyclopent-1-yl-3-methylen, Cyclohex-1-yl-3- oder -4-methylen, 3- oder 4- oder 5-Methyl-cyclohex-1-yl-3- oder -4-methylen, 3,4- oder 3,5-Dimethyl-cyclohex-1-yl-3- oder -4-methylen, 3,4,5- oder 3,4,4- oder 3,5,5-Trimethyl-cyclohex-1-yl-3- oder -4-methylen.

Wenn R₂ Alkylen-Cycloalkylen-Alkylen bedeutet, handelt es sich bevorzugt um C₁-C₄-Alkylen-Cyclopentylen-C₁-C₄-Alkylen und besonders um C₁-C₄-Alkylen-Cyclohexylen-C₁-C₄-Alkylen, das jeweils unsubstituiert oder einfach oder mehrfach mit C₁-C₄-Alkyl, besonders bevorzugt Methyl, substituiert ist. Bevorzugter steht die Gruppe Alkylen-Cycloalkylen-Alkylen für Ethylen-Cyclohexylen-Ethylen und insbesondere bevorzugt für Methylen-Cyclohexylen-Methylen, welches jeweils im Cyclohexylenrest unsubstituiert oder durch 1 bis 3 Methylgruppen substituiert ist. Einige Beispiele sind Cyclopentan-1,3-dimethylen, 3-Methyl-cyclopentan-1,3-dimethylen, 3,4-Dimethyl-cyclopentan-1,3-dimethylen, 3,4,4-Trimeth yl-cyclopentan-1,3-dimethylen, Cyclohexan-1,3- oder -1,4-dimethylen, 3- oder 4- oder 5-Methyl-cyclohexan-1,3- oder -1,4-dimethylen, 3,4- oder 3,5-Dimethyl-cyclohexan-1,3- oder -1,4-dimethylen, 3,4,5- oder 3,4,4-oder 3,5,5-Trimethyl-cyclohexan-1,3- oder -1,4-dimethylen.

Bei R₂ als C₃-C₈-Cycloalkylen-C₁-C₂-Alkylen-C₃-C₈-Cycloalkylen oder C₆-C₁₀-Arylen-C₁-C₂-Alkylen-C₆-C₁₀-Arylen handelt es sich bevorzugt um C₅-C₆-Cycloalkylen-Methylen-C₅-C₆-Cycloalkylen oder Phenylen-Methylen-Phenylen, welches jeweils im Cycloalkyl- oder Phenylring unsubstituiert oder durch eine oder mehrere Methylgruppen substituiert sein kann.

Der Rest R₂ in Formel (3a) hat eine symmetrische oder eine asymmetrische Struktur.

Eine bevorzugte Gruppe von Polyisocyanaten gemäss (c) umfasst Verbindungen der Formel (3a), worin R₂ lineares oder verzweigtes C₆-C₁₀-Alkylen, unsubstituiertes oder im Cyclohexylteil durch 1 bis 3 Methylgruppen substituiertes Cyclohexylen-Methylen oder Cyclohexylen-Methylen-Cyclohexylen oder unsubstituiertes oder im Phenylteil durch Methyl substituiertes Phenylen oder Phenylen-Methylen-Phenylen.

Beispiele für besonders bevorzugte Polyisocyanate der Formel (3) bzw. (3a) gemäss (c) sind Isophorondiisocyanat (IPDI), Toluylen-2,4-diisocyanat (TDI), Methylenbis(cyclohexylisocyanat), 1,6-Diisocyanato-2,2,4-trimethyl-n-hexan (TMDI), Methylenbis(phenylisocyanat) oder Hexamethylendiisocyanat (HMDI).

In der Formel (4) bedeutet R₃ Wasserstoff oder bevorzugt Methyl.

Die Variable z steht z.B. für die Zahl 0 oder vorzugsweise für die Zahl 1.

Bei B als Alkylen handelt es sich z.B. um 1-Methyl- oder 1,1-Dimethylmethylen, 1,2-Ethylen, 1,2- oder 1,3-Propylen, 2-Methyl-propylen oder 1,2-, 1,3-, 1,4- oder 2,3-Butylen, 2,2-Dimethyl-1,3-propylen, 2-Methyl- oder 2,3-Dimethyl-1,4-butylen, 1,2-, 1,3-, 1,4- oder 1,5-Pentylen, 2-Methyl- oder 3-Methyl- oder 4-Methylpentylen oder, 1,2-, 1,3-, 1,4-, 1,5- oder 1,6-Hexylen. B steht als Alkylen bevorzugt für C₁-C₄-Alkylen und insbesondere bevorzugt für Methylen.

Bei B als Phenylenrest handelt es sich z.B. um unsubstituiertes oder durch Methyl oder Methoxy substituiertes 1,2-, 1,3- oder 1,4-Phenylen. Vorzugsweise steht B als Phenylenrest für 1,3- oder 1,4-Phenylen.

Bei B als Aralkylenrest handelt es sich z.B. um unsubstituiertes oder durch Methyl oder Methoxy substituiertes Benzylen, wobei die Methylengruppe jeweils an den Isocyanatostickstoff gebunden ist. Vorzugsweise steht B als Aralkylenrest für den 1,3- oder 1,4-Phenylenmethylenrest, wobei die Methylengruppe jeweils an den Isocyanatostickstoff gebunden ist.

Bedeutet B einen Rest der zuvor angegebenen Formel (5), so kann es sich bei B₁ als Alkylen z.B. um einen der zuvor für R₂ oder B genannten C₂-C₁₂-Alkylenreste handeln.

Beispiele für B₁ als durch Sauerstoffatome unterbrochenes Alkylen sind -CH₂CH₂-O-CH₂CH₂-, -CH₂CH₂-O-CH₂CH₂-O-CH₂CH₂-, -CH₂CH₂-O-CH₂CH₂-O-CH₂CH₂-O-CH₂CH₂-, -CH(CH₃)CH₂-O-CH(CH₃)CH₂-, -CH(CH₃)CH₂-O-CH₂CH₂-, -CH(C₂H₅)CH₂-O-CH₂CH₂-, -CH(C₂H₅)CH₂-O-CH(C₂H₅)CH₂- oder -CH₂CH₂CH₂CH₂-O-CH₂CH₂CH₂CH₂-.

B₁ bedeutet bevorzugt lineares oder verzweigtes C₂-C₈-Alkylen, besonders bevorzugt lineares C₂-C₈-Alkylen und besonders bevorzugt lineares C₂-C₄-Alkylen. In einer bevorzugten Ausführungsform der Erfindung bedeutet B₁ 1,2-Ethylen.

B bedeutet bevorzugt einen Rest der zuvor angegebenen Formel (5), worin für die darin enthaltene Variable B₁ die zuvor genannten Bedeutungen und Bevorzugungen gelten.

Werden zur Herstellung der erfindungsgemäss verwendeten Präpolymere ausser den zuvor genannten Komponenten (a) - (d) weitere copolymersierbare Monomere verwendet, so kommen hierbei prinzipiell alle mit Di- oder Polyisocyanaten oder Di- oder Polyhydroxyverbindungen copolymerisierbaren Monomere, z.B. weitere Hydroxyverbindungen, z.B. ethylenisch ungesättigte Monohydroxyverbindungen wie 2-Hydroxyethylacrylat oder 2-Hydroxyethylmethacrylat, in Frage. Es ist jedoch bevorzugt, dass man ausser den genannten Komponenten (a) - (d) keine weiteren Comonomere zur Herstellung der erfindungsgemässen Präpolymere verwendet.

Eine bevorzugte Ausführungsform der erfindungsgemäss verwendeten Präpolymere betrifft solche, die das Polymerisierungsprodukt aus
(a) einem oder mehreren Polyalkylenglykolen der Formel

   HO-(CH₂-CH₂-O)ₙ-(CHY₁-CHY₂-O)ₘ-H (1a),

   worin von Y₁ und Y₂ der eine Rest Methyl und der andere Rest Wasserstoff bedeutet, und n und m unabhängig voneinander je für eine Zahl von 0 bis 50 stehen, worin die Summe von (n+m) 8 bis 50 beträgt,
(b) einer oder mehreren Polyhydroxyverbindungen der Formel

   R₁-(OH)ₓ (2),

   worin R₁ der Rest eines mehrfunktionellen aliphatischen oder cycloaliphatischen Alkohols ist und x für eine Zahl 3 bis 8 steht,
(c) einem oder mehreren Diisocyanaten der Formel

   OCN-R₂-NCO (3a),

   worin R₂ lineares oder verzweigtes C₃-C₁₈-Alkylen oder unsubstituiertes oder durch C₁-C₄-Alkyl oder C₁-C₄-Alkoxy substituiertes C₆-C₁₀-Arylen, C₇-C₁₈-Aralkylen, C₆-C₁₀-Arylen-C₁-C₂-Alkylen-C₆-C₁₀-Arylen, C₃-C₈-Cycloalkylen, C₃-C₈-Cycloalkylen-C₁-C₆-Alkylen, C₃-C₈-Cycloalkylen-C₁-C₂-Alkylen-C₃-C₈-Cycloalkylen oder C₁-C₆-Alkylen-C₃-C₈-Cycloalkylen-C₁-C₆-Alkylen bedeutet, und
(d) einem oder mehreren ethylenisch ungesättigten Monoisocyanaten der Formel 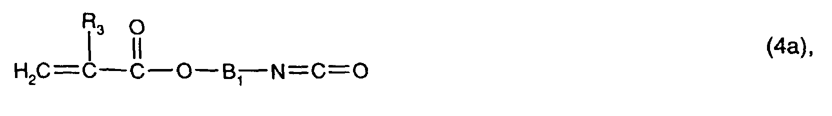 worin R₃ für Wasserstoff oder Methyl steht und B₁ lineares oder verzweigtes C₂-C₈-Alkylen bedeutet,
sind.

Eine besonders bevorzugte Ausführungsform der erfindungsgemäss verwendeten Präpolymere betrifft solche, die das Polymerisierungsprodukt aus
(a) einem oder mehreren Polyalkylenglykolen der Formel

   HO-(CH₂-CH₂-O)ₙ-(CHY₁-CHY₂-O)ₘ-H (1a),

   worin von Y₁ und Y₂ der eine Rest Methyl und der andere Rest Wasserstoff bedeutet, und n und m unabhängig voneinander je für eine Zahl von 0 bis 25 stehen, worin die Summe von (n+m) 9 bis 25 beträgt,
(b) einer oder mehreren Polyhydroxyverbindungen ausgewählt aus der Gruppe Glycerin, Diglycerin, Triglycerin, 1,1,1-Trishydroxymethylethan, 1,1,1-Trishydroxymethylpropan, 1,2,4-Butantriol, 1,2,6-Hexantriol, Erythrit, Pentaerythrit, Di- oder Tripentaerithrit, Arabit, Sorbit, Disorbit und Mannit oder Mischungen davon,
(c) einem Diisocyanat der Formel

   OCN-R₂-NCO (3a),

   worin R₂ lineares oder verzweigtes C₆-C₁₀-Alkylen, unsubstituiertes oder im Cyclohexylteil durch 1 bis 3 Methylgruppen substituiertes Cyclohexylen-Methylen oder Cyclohexylen-Methylen-Cyclohexylen oder unsubstituiertes oder im Phenylteil durch Methyl substituiertes Phenylen oder Phenylen-Methylen-Phenylen bedeutet, und
(d) einem ethylenisch ungesättigten Monoisocyanat der Formel 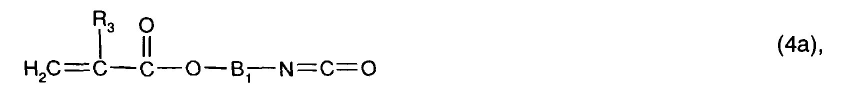 worin R₃ für Wasserstoff oder Methyl steht und B₁ lineares C₂-C₄-Alkylen bedeutet,
sind.

Die Präpolymere, die das Copolymerisationsprodukt aus den oben angegebenen Komponenten (a), (b), (c) und (d) sind, wobei jeweils die zuvor angegebenen Bedeutungen und Bevorzugungen gelten, sind neu und stellen einen weiteren Gegenstand der Erfindung dar.

Die erfindungsgemässen Präpolymere können hergestellt werden, z.B. indem man die zuvor angegebenen Komponenten (a), (b), (c) und (d) und gegebenenfalls weitere copolymerisierbare Monomere miteinander in beliebiger Reihenfolge in einem inerten Lösungsmittel bei einer Temperatur von z.B. -5°C bis 150°C umsetzt.

Geeignete inerte Lösungsmittel sind aprotische vorzugsweise polare Lösungsmittel wie zum Beispiel Halogenkohlenwasserstoffe (Chloroform, Methylenchlorid, Trichlorethan, Tetrachlorethan, Chlorbenzol), Ether (Tetrahydrofuran, Dioxan), Ketone (Aceton, Ethylmethylketon, Dibutylketon, Methyl-isobutylketon), Cabonsäureester und Lactone (Essigsäureethylester, Butyrolacton, Valerolacton), alkylierte Carbonsäureamide (N,N-Dimethylacetamid, N-Methylpyrrolidon), Nitrile (Acetonitril), Sulfone und Sulfoxide (Dimethylsulfoxid, Tetramethylensulfon). Bevorzugt werden polare Lösungsmittel verwendet.

Besteht das Präpolymer aus den Komponenten (a), (b), (c) und (d), so werden die Reaktanden z.B. in Mengen von
1 - 2 Moläquivalenten Komponente (a),
0,05 - 3 Moläquivalenten Komponente (b),
0,5 - 6 Moläquivalenten Komponente (c), und
0,1 - 2 Moläquivalenten Komponente (d) eingesetzt.

Bevorzugt ist es, Präpolymere unter Verwendung von
1 - 1,5 Moläquivalenten Komponente (a),
0,1 - 1,5 Moläquivalenten Komponente (b),
0,6-5 Moläquivalenten Komponente (c), und
0,3 - 1,8 Moläquivalenten Komponente (d) herzustellen.

Besonders bevorzugt ist es, Präpolymere unter Verwendung von
1' Moläquivalent Komponente (a),
0,2 - 0,4 Moläquivalenten Komponente (b),
0,8- 1,4 Moläquivalenten Komponente (c), und
0,5 - 0,8 Moläquivalenten Komponente (d) herzustellen.

Es ist weiterhin bevorzugt, dass die Komponenten (a) und (b) zusammen in genügender Menge anwesend sind, um ein praktisch vollständiges Abreagieren der in den Komponenten (c) und (d) anwesenden Isocyanatogruppen zu gewährleisten.

Die Komponenten (a) - (d) sind allesamt bekannte Verbindungen oder Verbindungsgemische, oder können nach an sich bekannten Methoden erhalten werden.

Die Reaktionstemperatur beträgt z.B. -5°C bis 150 °C, vorzugsweise 0 bis 100°C, besonders bevorzugt 0 bis 80°C und insbesondere bevorzugt 15 bis 50°C. Es ist weiterhin bevorzugt, die Umsetzung der hydroxygruppenhaltigen Komponenten (a) und (b) mit den isocyanatgruppenhaltigen Komponenten (c) und (d) in Gegenwart eines Katalysators durchzuführen. Geeignete Katalysatoren sind zum Beispiel Metallsalze wie Alkalimetallsalze oder Zinnsalze von organischen Carbonsäuren oder tertiäre Amine, zum Beispiel (C₁-C₆-Alkyl)₃N (Triethylamin, Tri-n-butylamin), N-Methylpyrrolidin, N-Methylmorpholin, N,N-Dimethylpiperidin, Pyridin und 1,4-Diaza-bicyclooctan. Als besonders effektiv haben sich Zinnsalze erwiesen, besonders Alkylzinnsalze von Carbonsäuren wie zum Beispiel Dibutylzinndilaurat und Zinndioctoat.

Der Katalysator wird z.B. in einem Molverhältnis von 1:10 bis 1:1000, vorzugsweise 1:50 bis 1:750, und besonders bevorzugt von ca. 1:100 bis 1:500, jeweils bezogen auf die Komponente (a), in die Reaktion eingesetzt.

Die Reaktionszeiten können innerhalb weiter Grenzen schwanken, wobei sich das Fortschreiten der Reaktion gut anhand der Abnahme des Isocyanat-Gehalts im Reaktionsgemisch verfolgen lässt. In der Regel sind Reaktionszeiten von 1 bis 24 Stunden und vorzugsweise 4 bis 16 Stunden ausreichend, um eine vollständige Umsetzung zu erhalten.

Die Isolierung und Reinigung der hergestellten Verbindungen erfolgt nach bekannten Verfahren wie zum Beispiel Extraktion, Kristallisation, Umkristallisation, Ultrafiltration oder chromatographische Reinigungsmethoden. Die Verbindungen werden in hohen Ausbeuten und Reinheiten erhalten.

Vorteilhaft setzt man ein Gemisch der zuvor angegebenen Komponenten (a) und (b) entweder mit einem Gemisch der Komponenten (c) und (d) oder zunächst mit der Komponente (c) und dann mit der Komponente (d) um.

Eine bevorzugte Ausführungsform der vorliegenden Erfindung betrifft ein Verfahren zur Herstellung von Präpolymeren, welches dadurch gekennzeichnet ist, dass man ein Gemisch der Komponenten (a) und (b) zunächst mit der Komponente (c) reagieren lässt und danach vorzugsweise ohne Zwischenisolierung mit der Komponente (d) umsetzt, sowie die danach erhältlichen Präpolymere.

Eine weitere bevorzugte Ausführungsform der vorliegenden Erfindung betrifft ein Verfahren zur Herstellung von vernetzbaren Präpolymeren, dadurch gekennzeichnet, dass man ein Gemisch von 1 bis 2 Moläquivalenten Komponente (a) und 0,05 bis 3 Moläquivalenten Komponente (b) in einem inerten Lösungsmittel bei einer Temperatur von 0 bis 100°C in Gegenwart eines Katalysators entweder mit einem Gemisch aus 0,5 bis 6 Moläquivalenten Komponente (c) und 0,1 bis 2 Moläquivalenten Komponente (d) oder zunächst mit 0,5 bis 6 Moläquivalenten Komponente (c) und dann mit 0,1 bis 2 Moläquivalenten Komponente (d) umsetzt, worin für die Komponenten (a), (b), (c) und (d) jeweils die zuvor angegebenen Bedeutungen und Bevorzugungen gelten, sowie die nach dem Verfahren erhältlichen vernetzbaren Präpolymere.

Eine besonders bevorzugte Ausführungsform der vorliegenden Erfindung betrifft ein Verfahren zur Herstellung von vernetzbaren Präpolymeren, dadurch gekennzeichnet, dass man ein Gemisch von 1 bis 1,5 Moläquivalenten Komponente (a) und 0,1 bis 1,5 Moläquivalenten Komponente (b) in einem inerten Lösungsmittel bei einer Temperatur von 0 bis 80°C in Gegenwart eines Katalysators ausgewählt aus der Gruppe Metallsalze von organischen Carbonsäuren und tertiäre Amine zunächst mit 0,6 bis 5 Moläquivalenten Komponente (c) und danach mit 0,3 bis 1,8 Moläquivalenten Komponente (d) umsetzt, worin für die Komponenten (a), (b), (c) und (d) jeweils die zuvor angegebenen Bedeutungen und Bevorzugungen gelten, sowie die nach dem Verfahren erhältlichen vernetzbaren Präpolymere.

Die erfindungsgemässen Präpolymere sind vernetzbar, jedoch unvernetzt oder zumindestens im wesentlichen unvernetzt; sie sind ausserdem stabil, d.h. eine spontane Vernetzung durch Homopolymerisation findet nicht statt.

Die durch Polymerisation der Komponenten (a) - (d) und gegebenenfalls weiteren copolymerisierbaren Monomeren erhältlichen vernetzbaren Präpolymere sind vorteilhaft flüssig bzw. leicht schmelzbar oder wasserlöslich; insbesondere sind solche Präpolymere bevorzugt, die wasserlöslich sind. Das durchschnittliche Molekulargewicht der erfindungsgemässen Präpolymere kann innerhalb weiter Grenzen schwanken. Ein durchschnittliches Molekulargewicht von z.B. 1000 bis 50000 hat sich für die erfindungsgemässen Präpolymere als vorteilhaft erwiesen.

Die erfindungsgemässen Präpolymere lassen sich darüber hinaus auf an sich bekannte Weise reinigen, beispielsweise durch Fällen mit Aceton, Dialyse oder Ultrafiltration, wobei die Ultrafiltration besonders bevorzugt ist. Durch diesen Reinigungsvorgang können die erfindungsgemässen Präpolymere in äusserst reiner Form, z.B. als lösungsmittelfreie Flüssigkeiten oder Schmelzen oder als aufkonzentrierte wässrige Lösungen, erhalten werden, die frei oder zumindest im wesentlichen frei sind von Reaktionsprodukten, wie Salzen, und von Ausgangsstoffen oder anderen nicht-polymeren Bestandteilen.

Das bevorzugte Reinigungsverfahren der erfindungsgemässen Präpolymere, eine Ultrafiltration, kann auf an sich bekannte Weise durchgeführt werden. Dabei besteht die Möglichkeit, die Ultrafiltration wiederholt durchzuführen, beispielsweise zwei- bis zehnmal. Alternativ dazu kann die Ultrafiltration auch kontinuierlich durchgeführt werden, bis der gewünschte Reinheitsgrad erreicht ist. Der gewünschte Reinheitsgrad kann grundsätzlich beliebig hoch gewählt werden, und wird vorzugsweise so eingestellt, dass der Gehalt der Präpolymere an unerwünschten Bestandteilen z.B. ≤ 0,001 % und besonders bevorzugt ≤ 0,0001 % (1 ppm) beträgt. Die Präpolymere können daneben, z.B. bedingt durch ihre Synthese, Bestandteile enthalten, die aus physiologischer Sicht akzeptabel sind, z.B. Natriumchlorid, wobei solche Bestandteile vorteilhaft in einer Menge von ≤ 1 %, bevorzugt ≤ 0,1 %, und besonders bevorzugt ≤ 0,01 % anwesend sind.

Die erfindungsgemässen Präpolymere sind, wie schon oben erwähnt, auf äusserst effektive Weise und gezielt vernetzbar, insbesondere durch Photovernetzung. Die Vernetzung kann in Anwesenheit oder vorzugsweise in Abwesenheit eines zusätzlichen vinylischen Comonomers stattfinden. Die vernetzten Polymere sind wasserunlöslich.

Bei der Photovernetzung wird geeigneterweise ein Photoinitiator zugesetzt, der eine radikalische Vernetzung initiieren kann. Beispiele hierfür sind dem Fachmann geläufig, speziell können als geeignete Photoinitiatoren Benzoinmethylether, 1-Hydroxycyclohexylphenylketon, Darocure 1173 oder Irgacure-Typen genannt werden. Die Vernetzung kann dann durch aktinische Strahlung, wie z.B. UV-Licht, oder ionisierende Strahlung, wie z.B. Gammastrahlung oder Röntgenstrahlung, ausgelöst werden.

Die Photopolymerisation kann ohne Zusatz eines Lösungsmittels durchgeführt werden, z.B. wenn es sich um ein flüssiges oder leicht schmelzbares Präpolymer handelt, oder findet in einem geeigneten Lösungsmittel statt. Als Lösungsmittel sind grundsätzlich alle Lösungsmittel geeignet, die die erfindungsgemässen Polymere und die gegebenenfalls zusätzlich verwendeten vinylischen Comonomere lösen, z.B. Wasser, Alkohole wie Niederalkanole, z.B. Ethanol oder Methanol, ferner Carbonsäureamide, wie Dimethylformamid, oder Dimethylsulfoxid, ebenso Gemische von geeigneten Lösungsmitteln, wie z.B. Gemische von Wasser mit einem Alkohol, wie z.B. ein Wasser / Ethanol- oder ein Wasser / Methanol-Gemisch.

Die Photovernetzung erfolgt vorzugsweise lösungsmittelfrei oder im wesentlichen lösungsmittelfrei oder unmittelbar aus einer wässrigen Lösung der erfindungsgemässen Präpolymere heraus, die als Resultat des bevorzugten Reinigungsschrittes, einer Ultrafiltration, erhalten werden kann, gegebenenfalls nach Zusatz eines zusätzlichen vinylischen Comonomeren. Beispielsweise kann die Photovernetzung einer etwa 15 bis 90 %-igen wässrigen Lösung vorgenommen werden.

Das Verfahren zur Herstellung der erfindungsgemässen vernetzten Polymere lässt sich z.B. dadurch charakterisieren, dass man ein Präpolymer, welches ein wie zuvor beschrieben aus den Komponenten (a), (b), (c) und (d) und gegebenenfalls weiteren copolymerisierbaren Monomeren erhältliches Polymerisationsprodukt ist, insbesondere in im wesentlichen reiner Form, d.h. zum Beispiel nach ein- oder mehrmaliger Ultrafiltration, lösungsmittelfrei oder im wesentlichen lösungsmittelfrei oder in Lösung, insbesondere in wässriger Lösung, in Anwesenheit oder vorzugsweise in Abwesenheit eines zusätzlichen vinylischen Comonomeren, vorzugsweise unter Verwendung eines Photoinitiators photovernetzt.

Das vinylische Comonomer, das erfindungsgemäss bei der Photovernetzung zusätzlich verwendet werden kann, kann hydrophil, hydrophob oder ein Gemisch eines hydrophoben und eines hydrophilen vinylischen Monomeren sein. Geeignete vinylische Monomere umfassen insbesondere diejenigen, die üblicherweise bei der Herstellung von Kontaktlinsen verwendet werden. Unter einem hydrophilen vinylischen Monomeren wird ein Monomer verstanden, das als Homopolymer typischerweise ein Polymer ergibt, das wasserlöslich ist oder mindestens 10 Gewichtsprozent Wasser absorbieren kann. Analog wird unter einem hydrophoben vinylischen Monomeren ein Monomer verstanden, das als Homopolymer typischerweise ein Polymer ergibt, das wasserunlöslich ist und weniger als 10 Gewichtsprozent Wasser absorbieren kann.

Es ist bevorzugt, ein hydrophobes vinylisches Comonomer zu verwenden oder ein Gemisch eines hydrophoben vinylischen Comonomeren mit einem hydrophilen vinylischen Comonomeren, wobei dieses Gemisch wenigstens 50 Gewichtsprozent eines hydrophoben vinylischen Comonomeren enthält. Auf diese Weise lassen sich die mechanischen Eigenschaften des Polymeren verbessern, ohne dass der Wassergehalt wesentlich absinkt. Grundsätzlich gilt jedoch, dass sowohl konventionelle hydrophobe vinylische Comonomere als auch konventionelle hydrophile vinylische Comonomere für die Copolymerisation mit den erfindungsgemässen Präpolymeren geeignet sind.

Geeignete hydrophobe vinylische Comonomere umfassen, ohne dass diese Aufzählung abschliessend wäre, C₁-C₁₈-Alkylacrylate und -methacrylate, C₃-C₁₈-Alkylacrylamide und -methacrylamide, Acrylnitril, Methacrylnitril, Vinyl-C₁-C₁₈-alkanoate, C₂-C₁₈-Alkene, C₂-C₁₈-Haloalkene, Styrol, C₁-C₆-Alkylstyrol, Vinylalkylether, in denen der Alkylteil 1 bis 6 Kohlenstoffatome aufweist, C₂-C₁₀-Perfluoralkyl-acrylate und -methacrylate oder entsprechend partiell fluorierte Acrylate und Methacrylate, C₃-C₁₂-Perfluoralkyl-ethyl-thiocarbonylaminoethyl-acrylate und -methacrylate, Acryloxy und Methacryloxy-alkylsiloxane, N-Vinylcarbazol, C₁-C₁₂-Alkylester der Maleinsäure, Fumarsäure, Itaconsäure, Mesaconsäure und dergleichen. Bevorzugt sind z.B. C₁-C₄-Alkylester von vinylisch ungesättigten Carponsäuren mit 3 bis 5 Kohlenstoffatomen oder Vinylester von Carbonsäuren mit bis zu 5 Kohlenstoffatomen.

Beispiele geeigneter hydrophober vinylischer Comonomere umfassen Methylacrylat, Ethylacrylat, Propylacrylat, Isopropylacrylat, Cyclohexylacrylat, 2-Ethylhexylacrylat, Methylmethacrylat, Ethylmethacrylat, Propylmethacrylat, Vinylacetat, Vinylpropionat, Vinylbutyrat, Vinylvalerat, Styrol, Chloropren, Vinylchlorid, Vinylidenchlorid, Acrylnitril, 1-Buten, Butadien, Methacrylnitril, Vinyltoluol, Vinylethylether, Perfluorhexylethylthiocarbonylaminoethylmethacrylat, Isobornylmethacrylat, Trifluorethylmethacrylat, Hexafluorisopropylmethacrylat, Hexafluorbutylmethacrylat, Tris-trimethylsilyloxy-silyl-propylmethacrylat, 3-Methacryloxypropylpentamethyldisiloxan und Bis(methacryloxypropyl)-tetramethyldisiloxan.

Geeignete hydrophile vinylische Comonomere umfassen, ohne dass diese Aufzählung abschliessend wäre, durch Hydroxy substituierte Niederalkylacrylate und -methacrylate, Acrylamid, Methacrylamid, Niederalkylacrylamide und - methacrylamide, ethoxylierte Acrylate und Methacrylate, durch Hydroxy substituierte Niederalkylacrylamide und Methacrylamide, durch Hydroxy substituierte Niederalkylvinylether, Natriumethylensulfonat, Natriumstyrolsulfonat, 2-Acrylamido-2-methylpropansulfonsäure, N-Vinylpyrrol, N-Vinylsuccinimid, N-Vinylpyrrolidon, 2- oder 4-Vinylpyridin, Acrylsäure, Methacrylsäure, Amino- (wobei der Begriff "Amino" auch quaternäres Ammonium umfasst), Mononiederalkylamino- oder Diniederalkylamino-niederalkylacrylate und -methacrylate, Allylalkohol und dergleichen. Bevorzugt sind z.B. durch Hydroxy substituierte C₂-C₄-Alkyl(meth)acrylate, fünf- bis siebengliedrige N-Vinyllactame, N,N-Di-C₁-C₄-alkyl-(meth)acrylamide und vinylisch ungesättigte Carbonsäuren mit insgesamt 3 bis 5 Kohlenstoffatomen.

Beispiele geeigneter hydrophiler vinylischer Comonomere umfassen Hydroxyethylmethacrylat, Hydroxyethylacrylat, Acrylamid, Methacrylamid, Dimethylacrylamid, Allylalkohol, Vinylpyridin, Vinylpyrrolidon, Glycerinmethacrylat, N-(1,1-Dimethyl-3-oxobutyl)acrylamid, und dergleichen.

Bevorzugte hydrophobe vinylische Comonomere sind Methylmethacrylat und Vinylacetat.

Bevorzugte hydrophile vinylische Comonomere sind 2-Hydroxyethylmethacrylat, N-Vinylpyrrolidon und Acrylamid.

Die erfindungsgemässe Verarbeitung der Präpolymere zu ophthalmischen Formkörpern, insbesondere zu Kontaktlinsen, kann in an sich bekannter Weise erfolgen, beispielsweise indem die Photovernetzung der erfindungsgemässen Präpolymere in einer geeigneten Kontaktlinsenform stattfindet. Weitere Beispiele für erfindungsgemässe Formkörper, neben Kontaktlinsen, sind z.B. Intraokularlinsen oder Augenverbände, weiterhin biomedizinische Formkörper, die in der Chirurgie Verwendung finden können, wie Herzklappen, künstliche Arterien oder dergleichen, ferner Filme oder Membranen, z.B. Membranen für Diffusionskontrolle, photostrukturierbare Folien für Informationsspeicherung, oder Photoresistmaterialien, z.B. Membranen oder Formkörper für Aetzresist oder Siebdruckresist.

Ein bevorzugtes Verfahren zur Herstellung von Formkörpern ist dadurch gekennzeichnet, dass es die folgenden Schritte umfasst:
a) Einbringen eines bei Raumtemperatur flüssigen oder leicht schmelzbaren wie zuvor geschildert aus den Komponenten (a), (b), (c) und (d) erhältlichen Präpolymers, welches im wesentlichen frei von Lösungsmitteln ist, in Anwesenheit oder vorzugsweise in Abwesenheit eines zusätzlichen vinylischen Comonomers und unter Ergänzung eines Photoinitiators in eine Form,
b) Auslösung der Photovernetzung,
c) Oeffnen der Form, sodass der Formkörper aus der Form entnommen werden kann.

Ein weiteres bevorzugtes Verfahren zur Herstellung von Formkörpern ist dadurch gekennzeichnet, dass es die folgenden Schritte umfasst:
a) Herstellen einer im wesentlichen wässrigen Lösung eines wie zuvor geschildert aus den Komponenten (a), (b), (c) und (d) erhältlichen wasserlöslichen Präpolymers in Anwesenheit oder vorzugsweise in Abwesenheit eines zusätzlichen vinylischen Comonomers und unter Ergänzung eines Photoinitiators,
b) Einbringen der erhaltenen Lösung in eine Form,
c) Auslösen der Vernetzung,
d) Oeffnen der Form, so dass der Formkörper aus der Form entnommen werden kann.

Für das Einbringen der erfindungsgemässen Präpolymere in eine Form können an sich bekannte Verfahren eingesetzt werden, wie insbesondere konventionelles Eindosieren z.B. durch Eintropfen. Sind vinylische Comonomere anwesend, so kommen hierbei die zuvor genannten Comonomere in den dort geschilderten Mengen in Frage. Gegebenenfalls anwesende vinylische Comonomere werden vorteilhaft zunächst mit dem erfindungsgemässen Präpolymer vermischt und dann in die Form eingebracht.

Entsprechende Formen sind beispielsweise aus Polypropylen gefertigt. Geeignete Materialien für wiederverwendbare Formen sind z.B. Quartz, Saphirglas oder Metalle.

Handelt es sich bei den herzustellenden Formkörpern um Kontaktlinsen, so können diese auf an sich bekannte Weise hergestellt werden, wie z.B. in einer konventionellen "spin-casting-mold", wie beispielsweise in US-A-3,408,429 beschrieben, oder nach dem sogenannten Full-Mold-Verfahren in einer statischen Form, wie z.B. in US-A-4,347,198 beschrieben.

Die Photovernetzung kann in der Form z.B. durch aktinische Strahlung, wie z.B. UV-Licht, oder ionisierende Strahlung, wie z.B. Gammastrahlung oder Röntgenstrahlung, ausgelöst werden.

Die Photovernetzung wird, wie schon erwähnt, vorteilhaft in Gegenwart eines Photoinitiators durchgeführt, der eine radikalische Vernetzung initiieren kann. Der Photoinitiator wird den erfindungsgemässen Präpolymeren vorteilhaft vor dem Einbringen in die Form zugesetzt, vorzugsweise indem man die Polymere und den Photoinitiator miteinander vermischt. Die Menge an Photoinitiator kann innerhalb weiter Grenzen gewählt werden, wobei sich eine Menge von bis zu 0,05 g/g Polymer und insbesondere von bis zu 0,003 g/g Polymer als günstig erwiesen hat.

Hervorzuheben ist, dass die Vernetzung erfindungsgemäss in sehr kurzer Zeit erfolgen kann, z.B. in ≤ 60 Minuten, vorteilhaft in ≤ 20 Minuten, bevorzugt in ≤ 10 Minuten, besonders bevorzugt in ≤ 5 Minuten, insbesondere bevorzugt in 1 bis 60 Sekunden und ganz besonders bevorzugt in 1 bis 30 Sekunden.

Das Oeffnen der Form, so dass der Formkörper aus der Form entnommen werden kann, kann auf an sich bekannte Weise erfolgen.

Handelt es sich bei dem erfindungsgemäss hergestellten Formkörper um eine Kontaktlinse und wurde diese lösungsmittelfrei aus einem zuvor gereinigten erfindungsgemässen Präpolymer hergestellt, entfällt nach der Entnahme des Formkörpers in der Regel die Notwendigkeit, Reinigungsschritte wie z.B. eine Extraktion anzuschliessen. Dies ergibt sich daraus, dass die eingesetzten Präpolymere keine unerwünschten niedermolekularen Bestandteile enthalten; folglich ist auch das vernetzte Produkt frei oder im wesentlichen frei von derartigen Bestandteilen und eine nachträglichen Extraktion kann entfallen. Die Kontaktlinse kann dementsprechend direkt in üblicher Weise durch Hydratation in eine gebrauchsfertige Kontaktlinse überführt werden. Geeignete Ausführungsformen der Hydratation, wobei gebrauchsfertige Kontaktlinsen mit unterschiedlichstem Wassergehalt erhältlich sind, sind dem Fachmann bekannt. Die Kontaktlinse wird z.B. in Wasser, in einer wässrigen Salzlösung, insbesondere in einer wässrigen Salzlösung, die eine Osmolarität von etwa 200 bis 450 Milliosmol in 1000 ml (Einheit: mOsm/l), vorzugsweise von etwa 250 bis 350 mOsm/l und insbesondere von etwa 300 mOsm/l, aufweist, oder in einem Gemisch von Wasser oder einer wässrigen Salzlösung mit einem physiologisch verträglichen polaren organischen Lösungsmittel, wie z.B. Glycerin, gequollen. Bevorzugt sind Quellungen des Präpolymeren in Wasser oder in wässrigen Salzlösungen.

Bei den für die Hydratation verwendeten wässrigen Salzlösungen handelt es sich vorteilhafterweise um Lösungen von physiologisch verträglichen Salzen, wie im Bereich der Kontaktlinsenpflege üblichen Puffersalzen, z.B. Phosphatsalzen, oder im Bereich der Kontaktlinsenpflege üblichen Isotonisierungsmitteln, wie insbesondere Alkalihalogeniden, z.B. Natriumchlorid, oder um Lösungen von Gemischen davon. Ein Beispiel für eine besonders geeignete Salzlösung ist eine künstliche, vorzugsweise gepufferte Tränenflüssigkeit, die bezüglich pH-Wert und Osmolarität der natürlichen Tränenflüssigkeit angepasst ist, z.B. eine ungepufferte, vorzugsweise eine gepufferte, beispielsweise durch Phosphatpuffer gepufferte, Kochsalzlösung, deren Osmolarität und pH-Wert der Osmolarität und dem pH-Wert der menschlichen Tränenflüssigkeit entsprechen.

Die vorstehend definierten Hydratationsflüssigkeiten sind vorzugsweise rein, d.h. frei oder im wesentlichen frei von unerwünschten Bestandteilen. Besonders bevorzugt handelt es sich um reines Wasser oder um eine wie vorstehend beschrieben künstliche Tränenflüssigkeit.

Handelt es sich bei dem erfindungsgemäss hergestellten Formkörper um eine Kontaktlinse und wurde diese aus einer wässrigen Lösung eines zuvor gereinigten erfindungsgemässen Präpolymers hergestellt, enthält auch das vernetzte Produkt keine störenden Verunreinigungen. Daher entfällt die Notwendigkeit einer nachträglichen Extraktion. Da die Vernetzung in einer im wesentlichen wässrigen Lösung durchgeführt wird, entfällt zudem die Notwendigkeit einer nachträglichen Hydratation. Die gemäss diesem Verfahren erhältlichen Kontaktlinsen zeichnen sich daher gemäss einer vorteilhaften Ausführungsform dadurch aus, dass sie ohne Extraktion für ihre bestimmungsgemässe Verwendung geeignet sind. Unter bestimmungsgemässer Verwendung wird in diesem Zusammenhang insbesondere verstanden, dass die Kontaktlinsen in das menschliche Auge eingesetzt werden können.

Die erfindungsgemäss erhältlichen Kontaktlinsen weisen eine Palette ungewöhnlicher und äusserst vorteilhafter Eigenschaften auf. Unter diesen Eigenschaften sind beispielsweise ihre ausgezeichnete Verträglichkeit mit der menschlichen Cornea zu nennen, die auf einem ausgewogenen Verhältnis von Wassergehalt, Sauerstoffdurchlässigkeit und mechanischen Eigenschaften beruhen. Im übrigen sind die erfindungsgemässen Kontaktlinsen von hoher Formbeständigkeit. Auch nach Autoklavierung bei z.B. etwa 120°C können keine Formveränderungen nachgewiesen werden.

Ferner kann hervorgehoben werden, dass die erfindungsgemässen Kontaktlinsen, d.h. insbesondere solche enthaltend ein vernetztes Polymer aus einem Präpolymer, welches ein Polymerisationsprodukt aus den zuvor angegebenen Komponenten (a), (b), (c) und (d) ist, auf gegenüber dem Stand der Technik sehr einfache und effiziente Weise hergestellt werden können. Dies beruht auf mehreren Faktoren. Einerseits sind die Ausgangsmaterialien kostengünstig zu beschaffen oder herzustellen. Zum zweiten bietet sich der Vorteil, dass die Präpolymere überraschenderweise stabil sind, so dass sie einer hochgradigen Reinigung unterzogen werden können. Zur Vernetzung kann daher ein Polymer eingesetzt werden, das praktisch keiner nachträglichen Reinigung mehr bedarf, wie insbesondere einer aufwendigen Extraktion von unpolymerisierten Bestandteilen. Ferner kann die Vernetzung lösungsmittelfrei oder in wässriger Lösung erfolgen, so dass ein nachträglicher Lösungsmitteltausch bzw. der Hydratationsschritt nicht erforderlich sind. Letztlich erfolgt die Photopolymerisation innerhalb kurzer Zeit, so dass der Herstellungsprozess der erfindungsgemässen Kontaktlinsen auch unter diesem Gesichtspunkt ausserordentlich wirtschaftlich gestaltet werden kann.

Alle die vorstehend genannten Vorteile gelten naturgemäss nicht nur für Kontaktlinsen, sondern auch für andere erfindungsgemässe Formkörper. Die Summe der verschiedenen vorteilhaften Aspekte bei der Herstellung der erfindungsgemässen Formkörper führt dazu, dass die erfindungsgemässen Formkörper besonders als Massenartikel geeignet sind, wie beispielsweise als Kontaktlinsen, die während einer kurzen Zeitspanne getragen werden und dann durch neue Linsen ersetzt werden.

In den nachfolgenden Beispielen sind Mengenangeben, falls nicht ausdrücklich anders angegeben, Gewichtsangaben, Temperaturen werden in Grad Celsius angegeben. Die Beispiele sind nicht geeignet, die Erfindung in irgendeiner Weise, beispielsweise auf den Umfang der Beispiele, zu beschränken.

### Herstellungsbeispiele

### Beispiel 1:

30 g Polyethylenglykol 600 und 0,67 g 1,1,1-Trimethylolpropan werden in 300 ml Ethylmethylketon gelöst und auf ca. 45°C erwärmt. Man gibt 0,07 g Dibutylzinndilaurat hinzu, tropft dann 8,35 g Isophorondiisocyanat hinzu und lässt ca. 4 Stunden bei 45°C rühren. Dann werden 6,2 g Isocyanatoethylmethacrylat (IEM) zugegeben und weitergerührt, bis der Isocyanatgehalt auf 0,04 Aequ./kg abgesunken ist. Die Lösung wird eingeeengt und das Produkt aus Diethylether als schwach gelbliches Oel ausgefällt.

### Beispiel 2:

20 g Polyethylenglykol 1000 und 0,54 g 1,1,1-Trimethylolpropan werden in 250 ml Ethylmethylketon gelöst und auf ca. 45°C erwärmt. Man gibt 0,05 g Dibutylzinndilaurat hinzu, tropft dann 4,45 g Isophorondiisocyanat hinzu und lässt ca. 2 Stunden bei 45°C rühren. Dann werden 1,86 g Isocyanatoethylmethacrylat (IEM) hinzugetropft und ca. 10 Stunden bei 45°C weitergerührt. Am Ende wird die Lösung eingeeengt und das Produkt aus Diethylether als klares Oel ausgefällt, welches nach einiger Zeit zu kristallisieren beginnt.

### Beispiel 3:

6 g Polyethylenglykol 600, 10 g Polyethylenglykol 1000 und 0,54 g 1,1,1-Trimethylolpropan werden mit 4,45 g Isophorondiisocyanat und 1,86 g Isocyanatoethylmethacrylat (IEM) nach der im Beispiel 2 beschriebenen Methode umgesetzt. Nach dem Ausfällen aus Diethylether wird ein klares, viskoses Oel erhalten.

### Beispiel 4:

12 g Polyethylenglykol 600 und 0,37 g Glycerin werden mit 3,36 g Hexamethylendiisocyanat und 1,86 g Isocyanatoethylmethacrylat (IEM) nach der im Beispiel 2 beschriebenen Methode umgesetzt. Nach dem Ausfällen aus Diethylether wird ein klares, viskoses Oel erhalten.

### Anwendungsbeispiele

**Beispiel 5:** 1,4 g des gemäss Beispiel 1 erhaltenen Polymers und 4 mg Irgacure® 2959 werden mit 0,6 g Wasser vermischt, bis eine homogene klare Lösung entsteht. Aus der klaren viskosen Lösung wird ein 0,1 mm dicker Film zwischen zwei Glasplatten mit Abstandshaltern hergestellt. Man belichtet den Film 10 Sekunden lang mit einer UV-Lampe. Es wird ein klarer, flexibler Film erhalten, der in Wasser zu einem klaren Hydrogel mit einem Feststoffgehalt von 42% quillt. Der Elastizitäts-Modul des gequollenen Films beträgt 1 MPa (gemessen mit einem Zugmessgerät der Firma Vitrodyne), die Reissdehnung weist einen Wert von 130% auf.

**Beispiel 6:** 1,4 g des gemäss Beispiel 2 erhaltenen Polymers und 4 mg Irgacure® 2959 werden mit 0,6 g Wasser vermischt, bis eine homogene klare Lösung entsteht. Aus der klaren viskosen Lösung wird ein 0,1 mm dicker Film zwischen zwei Glasplatten mit Abstandshaltern hergestellt. Man belichtet den Film 10 Sekunden lang mit einer UV-Lampe. Es wird ein klarer, flexibler Film erhalten, der in Wasser zu einem klaren Hydrogel mit einem Trockengehalt von 31% quillt. Der Elastizitäts-Modul des gequollenen Films beträgt 0,8 MPa (gemessen mit einem Zugmessgerät der Firma Vitrodyne), die Reissdehnung weist einen Wert von 140% auf.

**Beispiel 7:** Aus dem Produkt gemäss Beispiel 3 wird nach der im Beispiel 1 beschriebenen Methode eine 70%ige wässrige Lösung mit 0,2 Gew.-% Irgacure®2959 hergestellt. Der durch Belichten während 10 s erhaltene Film quillt in Wasser zu einem Hydrogel mit 30 % Trockengehalt. Der Elastizitäts-Modul des Films beträgt 0,7 MPa, die Reissdehnung ca. 120%.

**Beispiel 8:** 1,0 g des gemäss Beispiel 4 erhaltenen Polymers und 4 mg Irgacure® 2959 werden mit 1,0 g Wasser vermischt, bis eine homogene klare Lösung entsteht. Aus der klaren viskosen Lösung wird ein 0,1 mm dicker Film zwischen zwei Glasplatten mit Abstandshaltern hergestellt. Man belichtet den Film 10 Sekunden lang mit einer UV-Lampe. Es wird ein klarer, flexibler Film erhalten, der in Wasser zu einem klaren Hydrogel mit einem Trockengehalt von 26 % quillt. Der Elastizitäts-Modul des gequollenen Films beträgt 0,48 MPa (gemessen mit einem Zugmessgerät der Firma Vitrodyne), die Reissdehnung weist einen Wert von ca. 110% auf.

## Patentansprüche

1. Ophthalmischer Formkörper, erhältlich durch Vernetzung eines Präpolymers, welches das Copolymerisationsprodukt aus
(a) mindestens einem Polyalkylenglykol der Formel
HO-(CH₂-CH₂-O)ₙ-(CHY₁-CHY₂-O)ₘ-(CHY₃-CHY₄-O)ₚ-H (1)
oder
HO-[(CH₂-CH₂-CH₂-CH₂-O-]_{q}-H (1'),
worin von Y₁ und Y₂ der eine Rest Methyl und der andere Rest Wasserstoff bedeutet, von Y₃ und Y₄ der eine Rest Ethyl und der andere Rest Wasserstoff ist, q eine Zahl von 1 bis 50 und n, m und p unabhängig voneinander je für eine Zahl von 0 bis 100 stehen, worin die Summe von (n+m+p) 5 bis 100 beträgt,
(b) mindestens einer Verbindung aus der Gruppe
(i) Polyhydroxyverbindung der Formel
R₁-(OH)ₓ (2),
worin R₁ der Rest eines mehrfunktionellen aliphatischen oder cycloaliphatischen Alkohols ist und x für eine Zahl ≥ 3 steht,
(ii) Polyetherpolyol, welches das Polymerisationsprodukt aus einer Verbindung der Formel (2) und einem Glykol ist, und
(iii) Polyesterpolyol, welches das Polymerisationsprodukt aus einer Verbindung der Formel (2), einer Dicarbonsäure oder einem Derivat davon und einem Diol ist,
(c) mindestens einem Di- oder Polyisocyanat der Formel
R₂-(NCO)_{y} (3),
worin R₂ der Rest eines aliphatischen, cycloaliphatischen, aliphatisch-cycloaliphatischen, aromatischen oder araliphatischen Di- oder Polyisocyanats ist und y für eine Zahl von 2 bis 6 steht,
(d) mindestens einem ethylenisch ungesättigten Monoisocyanat der Formel 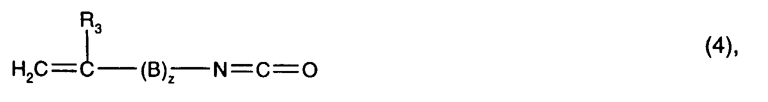 worin R₃ für Wasserstoff oder Methyl steht, z die Zahl 0 oder 1 bedeutet, B C₁-C₆-Alkylen, gegebenenfalls durch C₁-C₄-Alkyl oder C₁-C₄-Alkoxy substituiertes Phenylen oder C₇-C₁₂-Aralkylen oder ein Rest der Formel 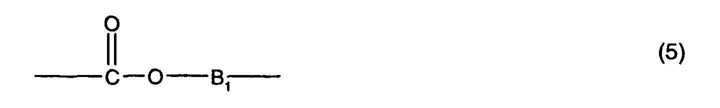 ist und B₁ lineares oder verzweigtes C₂-C₁₂-Alkylen, welches gegebenenfalls durch ein oder mehrere Sauerstoffatome unterbrochen ist, bedeutet,
und gegebenenfalls einem oder mehreren weiteren copolymerisierbaren Monomeren ist, in Abwesenheit oder Anwesenheit eines zusätzlichen vinylischen Comonomers.

2. Ophthalmischer Formkörper gemäss Anspruch 1, dadurch gekennzeichnet, dass es sich um eine Kontaktlinse handelt.

3. Ophthalmischer Formkörper gemäss Anspruch 1, dadurch gekennzeichnet, dass er durch Vernetzung eines Präpolymers, welches das Copolymerlsationsprodukt aus den im Anspruch 1 angegebenen Komponenten (a), (b), (c) und (d) ist, in Abwesenheit oder Anwesenheit eines zusätzlichen vinylischen Comonomers erhältlich ist.

4. Ophthalmischer Formkörper gemäss einem der Ansprüche 1 bis 3, dadurch gekennzeichnet, dass es sich bei der Komponente (a) um ein Polyalkylenglykol der Formel (1) handelt, worin p 0 ist, n und m unabhängig voneinander je eine Zahl von 0 bis 50 sind und die Summe von (n+m) 8 bis 50 beträgt.

5. Ophthalmischer Formkörper gemäss einem der Ansprüche 1 bis 4, dadurch gekennzeichnet, dass es sich bei der Komponente (b) um eine Verbindung der Formel (2) handelt, worin R₁ den Rest eines aliphatischen Polyols mit 3 bis 12 Kohlenstoffatomen bedeutet und x für eine Zahl von 3 bis 8 steht.

6. Ophthalmischer Formkörper gemäss einem der Ansprüche 1 bis 5, dadurch gekennzeichnet, dass es sich bei der Komponente (b) um Glycerin, Diglycerin, Triglycerin, 1,1,1-Trishydroxymethylethan, 1,1,1-Trishydroxymethylpropan, 1,2,4-Butantriol, 1,2,6-Hexantriol, Erythrit, Pentaerythrit, Di- oder Tripentaerithrit, Arabit, Sorbit, Disorbit oder Mannit oder um eine Mischung zweier oder mehrerer der genannten Polyole handelt.

7. Ophthalmischer Formkörper gemäss einem der Ansprüche 1 bis 6, dadurch gekennzeichnet, dass es sich bei dem Polyisocyanat gemäss (c) um eine Verbindung der Formel
OCN-R₂-NCO, (3a)
handelt, worin R₂ lineares oder verzweigtes C₃-C₁₈-Alkylen oder unsubstituiertes oder durch C₁-C₄-Alkyl oder C₁-C₄-Alkoxy substituiertes C₆-C₁₀-Arylen, C₇-C₁₈-Aralkylen, C₆-C₁₀-Arylen-C₁-C₂-Alkylen-C₆-C₁₀-Arylen, C₃-C₈-Cycloalkylen, C₃-C₈-Cycloalkylen-C₁-C₆-Alkylen, C₃-C₈-Cycloalkylen-C₁-C₂-Alkylen-C₃-C₈-Cycloalkylen oder C₁-C₆-Alkylen-C₃-C₈-Cycloalkylen-C₁-C₆-Alkylen ist.

8. Ophthalmischer Formkörper gemäss Anspruch 7, dadurch gekennzeichnet, dass R₂ lineares oder verzweigtes C₆-C₁₀-Alkylen, unsubstituiertes oder im Cyclohexylenteil durch 1 bis 3 Methylgruppen substituiertes Cyclohexylen-Methylen oder Cyclohexyl-Methylen-Cyclohexylen oder unsubstituiertes oder im Phenylteil durch Methyl substituiertes Phenylen oder Phenylen-Methylen-Phenylen ist.

9. Ophthalmischer Formkörper gemäss einem der Ansprüche 1 bis 8, dadurch gekennzeichnet, dass es sich bei dem Di- oder Polyisocyanat gemäss (c) um Isophorondiisocyanat, Toluylen-2,4-diisocyanat, Methylenbis(cyclohexylisocyanat), 1,6-Diisocyanato-2,2,4-trimethyl-n-hexan, Methylenbis(phenylisocyanat) oder Hexamethylendiisocyanat handelt.

10. Ophthalmischer Formkörper gemäss einem der Ansprüche 1 bis 9, dadurch gekennzeichnet, dass z in Formel (4) die Zahl 1 bedeutet und B für einen Rest der im Anspruch 1 angegebenen Formel (5) steht, worin B₁ lineares oder verzweigtes C₂-C₈-Alkylen ist.

11. Ophthalmischer Formkörper gemäss Formel (1), erhältlich durch Vernetzung eines Präpolymers, welches das Copolymerisationsprodukt aus
(a) einem oder mehreren Polyalkylenglykolen der Formel
HO-(CH₂-CH₂-O)ₙ-(CHY₁-CHY₂-O)ₘ-H (1a),
worin von Y₁ und Y₂ der eine Rest Methyl und der andere Rest Wasserstoff bedeutet, und n und m unabhängig voneinander je für eine Zahl von 0 bis 50 stehen, worin die Summe von (n+m) 8 bis 50 beträgt,
(b) (i) einer oder mehreren Polyhydroxyverbindungen der Formel
R₁-(OH)ₓ (2),
worin R₁ der Rest eines mehrfunktionellen aliphatischen oder cycloaliphatischen Alkohols ist und x für eine Zahl 3 bis 8 steht,
(c) einem oder mehreren Diisocyanaten der Formel
OCN-R₂-NCO (3a),
worin R₂ lineares oder verzweigtes C₃-C₁₈-Alkylen oder unsubstituiertes oder durch C₁-C₄-Alkyl oder C₁-C₄-Alkoxy substituiertes C₆-C₁₀-Arylen, C₇-C₁₈-Aralkylen, C₆-C₁₀-Arylen-C₁-C₂-Alkylen-C₆-C₁₀-Arylen, C₃-C₈-Cycloalkylen, C₃-C₈-Cycloalkylen-C₁-C₆-Alkylen, C₃-C₈-Cycloalkylen-C₁-C₂-Alkylen-C₃-C₈-Cycloalkylen oder C₁-C₆-Alkylen-C₃-C₈-Cycloalkylen-C₁-C₆-Alkylen bedeutet, und
(d) einem oder mehreren ethylenisch ungesättigten Monoisocyanaten der Formel 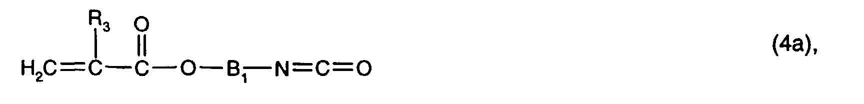 worin R₃ für Wasserstoff oder Methyl steht und B₁ lineares oder verzweigtes C₂-C₈-Alkylen bedeutet,
ist, in Abwesenheit oder Anwesenheit eines zusätzlichen vinylischen Comonomers.

12. Ophthalmischer Formkörper gemäss Formel (1), erhältlich durch Vernetzung eines Präpolymers, welches das Copolymerisationsprodukt aus
(a) einem oder mehreren Polyalkylenglykolen der Formel
HO-(CH₂-CH₂-O)ₙ-(CHY₁-CHY₂-O)ₘ-H (1a),
worin von Y₁ und Y₂ der eine Rest Methyl und der andere Rest Wasserstoff bedeutet, und n und m unabhängig voneinander je für eine Zahl von 0 bis 25 stehen, worin die Summe von (n+m) 9 bis 25 beträgt,
(b) einer oder mehreren Polyhydroxyverbindungen ausgewählt aus der Gruppe Glycerin, Diglycerin, Triglycerin, 1,1,1-Trishydroxymethylethan, 1,1,1-Trishydroxymethylpropan, 1,2,4-Butantriol, 1,2,6-Hexantriol, Erythrit, Pentaerythrit, Di- oder Tripentaerithrit, Arabit, Sorbit, Disorbit und Mannit oder Mischungen davon,
(c) einem Diisocyanat der Formel
OCN-R₂-NCO (3a),
worin R₂ lineares oder verzweigtes C₆-C₁₀-Alkylen, unsubstituiertes oder im Cyclohexylteil durch 1 bis 3 Methylgruppen substituiertes Cyclohexylen-Methylen oder Cyclohexylen-Methylen-Cyclohexylen oder unsubstituiertes oder im Phenylteil durch Methyl substituiertes Phenylen oder Phenylen-Methylen-Phenylen bedeutet, und
(d) einem ethylenisch ungesättigten Monoisocyanat der Formel 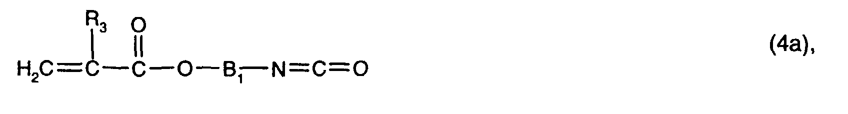 worin R₃ für Wasserstoff oder Methyl steht und B₁ lineares C₂-C₄-Alkylen bedeutet,
ist, in Abwesenheit eines zusätzlichen vinylischen Comonomers.

13. Ophthalmischer Formkörper gemäss einem der Ansprüche 1 bis 12, dadurch gekennzeichnet, dass die Vernetzung des Präpolymers in Abwesenheit von einem zusätzlichen vinylischen Comonomer stattfindet.

14. Ophthalmischer Formkörper gemäss einem der Ansprüche 1 bis 12, dadurch gekennzeichnet, dass man das Präpolymer in im wesentlichen reiner Form in wässriger Lösung in Abwesenheit eines zusätzlichen vinylischen Comonomeren unter Verwendung eines Photoinitiators photovernetzt.

15. Präpolymer, welches das Copolymerisationsprodukt aus den im Anspruch 1 angegebenen Komponenten (a), (b), (c) und (d) ist.

16. Präpolymer gemäss Anspruch 15, welches das Copolymerisationsprodukt aus
(a) einem oder mehreren Polyalkylenglykolen der Formel
HO-(CH₂-CH₂-O)ₙ-(CHY₁-CHY₂-O)ₘ-H (1a),
worin von Y₁ und Y₂ der eine Rest Methyl und der andere Rest Wasserstoff bedeutet, und n und m unabhängig voneinander je für eine Zahl von 0 bis 50 stehen, worin die Summe von (n+m) 8 bis 50 beträgt,
(b) (i) einer oder mehreren Polyhydroxyverbindungen der Formel
R₁-(OH)ₓ (2),
worin R₁ der Rest eines mehrfunktionellen aliphatischen oder cycloaliphatischen Alkohols ist und x für eine Zahl 3 bis 8 steht,
(c) einem oder mehreren Diisocyanaten der Formel
OCN-R₂-NCO (3a),
worin R₂ lineares oder verzweigtes C₃-C₁₈-Alkylen oder unsubstituiertes oder durch C₁-C₄-Alkyl oder C₁-C₄-Alkoxy substituiertes C₆-C₁₀-Arylen, C₇-C₁₈-Aralkylen, C₆-C₁₀-Arylen-C₁-C₂-Alkylen-C₆-C₁₀-Arylen, C₃-C₈-Cycloalkylen, C₃-C₈-Cycloalkylen-C₁-C₆-Alkylen, C₃-C₈-Cycloalkylen-C₁-C₂-Alkylen-C₃-C₈-Cycloalkylen oder C₁-C₆-Alkylen-C₃-C₈-Cycloalkylen-C₁-C₆-Alkylen bedeutet, und
(d) einem oder mehreren ethylenisch ungesättigten Monoisocyanaten der Formel 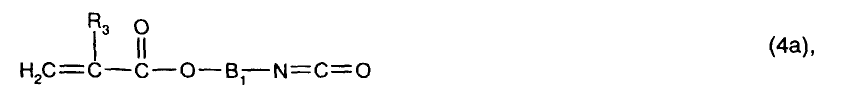 worin R₃ für Wasserstoff oder Methyl steht und B₁ lineares oder verzweigtes C₂-C₈-Alkylen bedeutet,
ist.

17. Präpolymer gemäss Anspruch 15, welches das Copolymerisationsprodukt aus
(a) einem oder mehreren Polyalkylenglykolen der Formel
HO-(CH₂-CH₂-O)ₙ-(CHY₁-CHY₂-O)ₘ-H (1a),
worin von Y₁ und Y₂ der eine Rest Methyl und der andere Rest Wasserstoff bedeutet, und n und m unabhängig voneinander je für eine Zahl von 0 bis 25 stehen, worin die Summe von (n+m) 9 bis 25 beträgt,
(b) einer oder mehreren Polyhydroxyverbindungen ausgewählt aus der Gruppe Glycerin, Diglycerin, Triglycerin, 1,1,1-Trishydroxymethylethan, 1,1,1-Trishydroxymethylpropan, 1,2,4-Butantriol, 1,2,6-Hexantriol, Erythrit, Pentaerythrit, Di- oder Tripentaerithrit, Arabit, Sorbit, Disorbit und Mannit oder Mischungen davon,
(c) einem Diisocyanat der Formel
OCN-R₂-NCO (3a),
worin R₂ lineares oder verzweigtes C₆-C₁₀-Alkylen, unsubstituiertes oder im Cyclohexylteil durch 1 bis 3 Methylgruppen substituiertes Cyclohexylen-Methylen oder Cyclohexylen-Methylen-Cyclohexylen oder unsubstituiertes oder im Phenylteil durch Methyl substituiertes Phenylen oder Phenylen-Methylen-Phenylen bedeutet, und
(d) einem ethylenisch ungesättigten Monoisocyanat der Formel 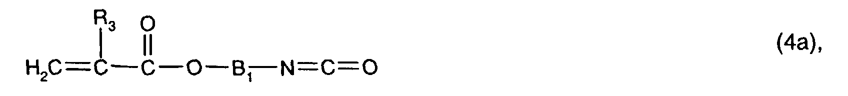 worin R₃ für Wasserstoff oder Methyl steht und B₁ lineares C₂-C₄-Alkylen bedeutet,
ist.

18. Verfahren zur Herstellung eines Präpolymers gemäss Anspruch 15, dadurch gekennzeichnet, dass man die im Anspruch 1 angegebenen Komponenten (a), (b), (c) und (d) miteinander in beliebiger Reihenfolge in einem inerten Lösungsmittel bei einer Temperatur von -5°C bis 150°C umsetzt.

19. Verfahren gemäss Anspruch 18, dadurch gekennzeichnet, dass man ein Gemisch der Komponenten (a) und (b) entweder mit einem Gemisch der Komponenten (c) und (d) oder zunächst mit der Komponente (c) und dann mit der Komponente (d) umsetzt.

20. Verfahren gemäss Anspruch 18, dadurch gekennzeichnet, dass man ein Gemisch von 1 bis 2 Moläquivalenten Komponente (a) und 0,05 bis 3 Moläquivalenten Komponente (b) in einem inerten Lösungsmittel bei einer Temperatur von 0 bis 100°C in Gegenwart eines Katalysators entweder mit einem Gemisch aus 0,5 bis 6 Moläquivalenten Komponente (c) und 0,1 bis 2 Moläquivalenten Komponente (d) oder zunächst mit 0,5 bis 6 Moläquivalenten Komponente (c) und dann mit 0,1 bis 2 Moläquivalenten Komponente (d) umsetzt.

21. Verfahren gemäss Anspruch 18, dadurch gekennzeichnet, dass man ein Gemisch von 1 bis 1,5 Moläquivalenten Komponente (a) und 0,1 bis 1,5 Moläquivalenten Komponente (b) in einem inerten Lösungsmittel bei einer Temperatur von 0 bis 80°C in Gegenwart eines Katalysators ausgewählt aus der Gruppe Metallsalze von organischen Carbonsäuren und tertiäre Amine zunächst mit 0,6 bis 5 Moläquivalenten Komponente (c) und danach mit 0,3 bis 1,8 Moläquivalenten Komponente (d) umsetzt.

22. Verfahren zur Herstellung von Formkörpern , dadurch gekennzeichnet, dass es die folgenden Schritte umfasst:
a) Einbringen eines gemäss einem der Ansprüche 15 bis 21 erhältlichen, bei Raumtemperatur flüssigen oder leicht schmelzbaren Präpolymers, das im wesentlichen frei von Lösungsmitteln ist, in Abwesenheit oder Anwesenheit eines zusätzlichen vinylischen Comonomers und unter Ergänzung eines Photoinitiators in eine Form,
b) Auslösung der Photovernetzung,
c) Oeffnen der Form, sodass der Formkörper aus der Form entnommen werden kann.

23. Verfahren gemäss Anspruch 22, dadurch gekennzeichnet, dass man das Verfahren in Abwesenheit eines zusätzlichen vinylischen Comonomers durchführt.

24. Verfahren zur Herstellung von Formkörpern, dadurch gekennzeichnet, dass es die folgenden Schritte umfasst:
a) Herstellen einer im wesentlichen wässrigen Lösung eines gemäss einem der Ansprüche 15 bis 21 erhältlichen, wasserlöslichen Präpolymers in Abwesenheit oder Anwesenheit eines zusätzlichen vinylischen Comonomers und unter Ergänzung eines Photoinitiators,
b) Einbringen der erhaltenen Lösung in eine Form,
c) Auslösen der Photovernetzung,
d) Oeffnen der Form, so dass der Formkörper aus der Form entnommen werden kann.

25. Verfahren gemäss Anspruch 24, dadurch gekennzeichnet, dass man das Verfahren in Abwesenheit eines zusätzlichen vinylischen Comonomers durchführt.

26. Verfahren gemäss einem der Ansprüche 22 bis 25, dadurch gekennzeichnet, dass es sich bei dem Formkörper um eine Kontaktlinse handelt.

27. Formkörper, insbesondere Kontaktlinse, erhältlich nach dem Verfahren gemäss einem der Ansprüche 22 bis 25.

28. Kontaktlinse gemäss Anspruch 27, dadurch gekennzeichnet, dass sie ohne Extraktion für ihre bestimmungsgemässe Verwendung geeignet ist.
